# EUROPEAN PATENT APPLICATION

(11) **EP 2 980 682 A1**
(43) Date of publication of application: **03.02.2016**
(21) Application number: 15174306.9
(22) Date of filing: 29.06.2015
(51) Int. Cl.: G06F 3/041, G06F 3/044

(54) **CAPACITANCE TYPE TOUCH PANEL AND METHOD OF DETECTING INPUT OPERATION POSITION THEREIN**

(30) Priority: 30.07.2014 JP 2014154521
(71) Applicant: SMK Corporation, Tokyo 142 (JP); KABUSHIKI KAISHA TOKAI RIKA DENKI SEISAKUSHO, Niwa-gun, Aichi 480-0195 (JP)
(72) Inventor: Yoshikawa, Osamu, Tokyo (JP); Imai, Takao, Aichi, 480-0195 (JP)
(74) Representative: Piotrowicz, Pawel Jan Andrzej

(57) **Abstract**

A capacitance type touch panel is provided which detects an input operation position with high accuracy without being affected by noise irrespective of the input operation position and the size of an input operation body. A method of detecting an input operation position in the capacitance type touch panel is also provided. When an input operation position is in between adjoining intersection points (m,n), voltage change levels R(m, n), which are less than a cutoff threshold value, of intersection points (m1, n1) on a side opposite to the input operation position are removed from calculation data for the input operation position. Thus, even if either of the adjoining intersection points (m,n) is designated as an intersection point (m0, n0) having a maximum value, the calculated input operation position does not largely change.

## Description

### Field

The present invention relates to a capacitance type touch panel that detects an input operation position from the arrangement position of intersection points between drive areas and detection electrodes on an insulation panel at which capacitance is changed by an approach of an input operation body thereto, and a method of detecting the input operation position therein. In particular, the present invention relates to a capacitance type touch panel that detects the input operation position with high accuracy without being affected by noise.

### Background

Capacitance type touch panels, which detect an input operation position by an input operation body such as a finger, are categorized into a self capacitance type (one-wire type) and a mutual capacitance type (two-wire type). In the self capacitance type touch panels, detection electrodes having an increase in stray capacitance due to an approach of the input operation body are detected to detect the input operation position from the arrangement position of those detection electrodes. In the mutual capacitance type touch panels, an alternating current detection signal at a predetermined voltage level is outputted to drive electrodes and detection electrodes at which detection voltages of the detection signal are decreased due to an approach of the input operation body are detected to detect the input operation position from the arrangement position of those detection electrodes. The former type has simpler structure because there is no need to provide the drive electrodes, but the latter mutual capacitance type is adopted in general because the stray capacitance to be detected is at a minute level of 10 to 20 pF that is difficult to detect.

In the mutual capacitance type touch panels, a plurality of the drive electrodes to which the detection signal is outputted and a plurality of the detection electrodes for detecting the detection voltages appearing owing to the detection signal are arranged orthogonally to each other. A voltage change level of the detection voltage is monitored at each of intersection points at which the drive electrodes and the detection electrodes intersect. Thus, the input operation position is detected from the position of the intersection points of the detection electrodes at which the voltage change levels are equal to or more than a predetermined threshold value due to an approach of the input operation body (Patent Literatures 1 and 2).

A method of detecting the input operation position in two directions orthogonal to each other in a conventional capacitance type touch panel 100 described in Patent Literature 1 will be hereinafter described with the use of Figs. 6 and 7. As shown in Fig. 6, in the capacitance type touch panel 100, thirteen drive electrodes D1 to D13 each having a rhombus pattern extending in an X direction and twelve detection electrodes S1 to S12 each having a rhombus pattern extending in a Y direction are arranged on a front surface of an insulation panel 101 such that crossing positions (intersection points) thereof are insulated from one another. The thirteen drive electrodes D1 to D13 are arranged at an equal pitch in the Y direction, and the twelve detection electrodes S1 to S12 are arranged at an equal pitch in the X direction. The rhombus patterns of one type of the electrodes complement gaps of the rhombus patterns of the other type of the electrodes, so that a staggered pattern appears as a whole.

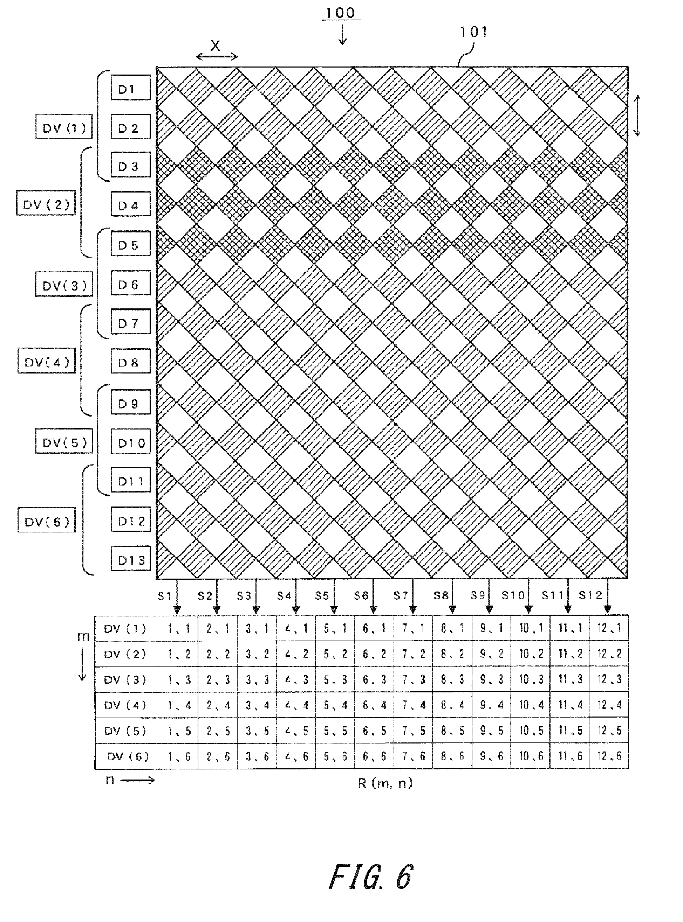

Three adjoining drive electrodes D are grouped into one drive area DV(m). While an alternating current detection signal at a constant voltage is outputted to the drive electrodes D included in the drive area DV(m) on a drive area DV(m) basis, detection voltages appearing in the plurality of detection electrodes S(n) that intersect the drive area DV(m) to which the alternating current signal is outputted are sequentially read off. If there is no approach of the input operation body such as the finger and no variation in stray capacitance in the drive area DV(m) and the detection electrodes S(n), the detection voltages do not vary from a normal voltage V₀ that is proportional to the output voltage of the alternating current detection signal. On the other hand, when the input operation body approaches the intersection points (m,n) between the drive area DV(m) to which the alternating current detection signal is outputted and the detection electrodes S(n) for detecting the detection voltages, capacitance increases between the drive area DV(m) and the input operation body or between the detection electrode S(n) and the input operation body. Thus, part of the alternating current detection signal flows into the input operation body and hence the detection voltages appearing in the detection electrodes S(n) decrease from the normal voltage V₀. The shorter the distance between the input operation body and the drive area DV(m) or between the input operation body and the detection electrode S(n), the more the detection voltage decreases from the normal voltage V₀. Thus, a voltage change level R(m,n) in which the potential difference between the normal voltage V₀ and the detection voltage is inverted and binarized represents the relative distance between the input operation body i.e. the input operation position and the intersection point (m,n). As shown in Fig. 6, the input operation position is detected from the voltage change levels R(m,n) of m rows and n columns detected in one scan period.

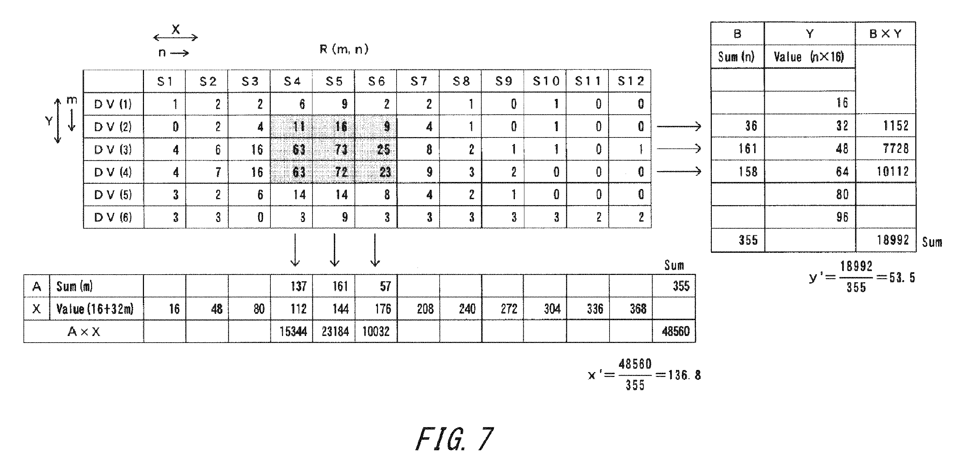

For example, Fig. 7 shows the voltage change levels R(m,n) of m rows and n columns of all of the intersection points (m,n) detected in a scan period (S1), when the input operation position is in the vicinity of a drive area DV(3) and a detection electrode S(5). In the drawing, for ease of explanation, each of the voltage change levels R(m,n) is represented by a decimal value, and "0" represents a case where the detection voltage detected from the detection electrode S(n) without an approach of the input operation body is the normal voltage V₀, and "16" is an input judgment threshold value for assuming that an input operation is performed.

At the intersection points (m,n) that are far from the input operation position to the extent that the capacitance with the input operation body is negligible, the detection voltages read from the detection electrodes S(n) are basically at the normal voltage V₀. Thus, the voltage change levels R(m,n) at the intersection points (m,n) become "0," or fluctuate among values on the order of 0 to 7 by the effect of base noise. On the other hand, a voltage change level R(3,5) is maximized at an intersection point (3,5) in the vicinity of the input operation position, as compared with the surrounding intersection points (m,n), and has a value of "73" exceeding the input judgment threshold value "16." Thus, it is assumed that the input operation position is in the vicinity of the intersection point (3,5) having a maximum value in the X direction and the Y direction in the drawing.

Then, the intersection point (3,5) having the maximum voltage change level R(3,5) and eight intersection points (m1, n1) of a first intersection point group that adjoin and surround the intersection point (3,5) are designated as effective intersection points to be used in calculation of the input operation position. The input operation position in each of the X and Y directions is calculated from a weighted average value of the voltage change levels R(m,n) (represented with a gray background in the drawing) of the effective intersection points.

To be more specific, a weight is assigned to each arrangement position of the twelve detection electrodes S(n) on the insulation panel 101, with assigning a weight "16" to an initial value and a weight "32" to the pitch in the X direction. Then, the voltage change levels R(m,n) of the effective intersection points are summed up in the Y direction in each of detection electrodes S(4-6), so that a Sum(4) of "137," a Sum(5) of "161," a Sum(6) of "57," and a sum total of "355" are obtained. By multiplying each of the sum values Sum(4-6) of the detection electrodes S(4-6) by the weight assigned to the arrangement position of each of the detection electrodes S(4-6), a sum total of "48560" is obtained. The input operation position in the X direction calculated from the weighted average is 136.8, that is, "48560"/"355." Therefore, a position of 136.8 (between a detection electrode S(4) and the detection electrode S(5)) weighted in the X direction is detected as an input operation position x' in the X direction.

In a like manner, an input operation position y' in the Y direction is calculated from a weighted average of the voltage change levels R(m,n) of the effective intersection points in the Y direction. A weight is assigned to position in the Y direction, with assigning a weight "16" to the pitch of the six drive areas DV(m) and adding a weight "16" to a midpoint position of each drive area DV(m). Then, the voltage change levels R(m,n) of the effective intersection points are summed up in the X direction in each of the drive areas DV(2-4), so that a Sum(2) of "36," a Sum(3) of "161," a Sum(4) of "158," and a sum total of "355" are obtained. By multiplying each of the sum values Sum(2-4) of the drive areas DV(2-4) by the weight assigned to the midpoint position of each of the drive areas DV(2-4) in the Y direction, a sum total of "18992" is obtained. The input operation position in the Y direction calculated from the weighted average is 53.5, that is, "18992"/"355." Therefore, a position of 53.5 (between the drive area DV(3) and a drive area DV(4)) weighted in the Y direction is detected as an input operation position y' in the Y direction.

### Citation List

### Patent Literature

Patent Literature 1: Japanese Patent Application Laid-Open No. 2013-152635
Patent Literature 2: Japanese Patent Application Laid-Open No. 2012-248035

### Summary

### Technical Problem

As described above, an input operation position (x, y) in the X direction and the Y direction is detected with high accuracy in each scan period by complementing the pitches between the drive areas DV(m) and between the detection electrodes S(n). However, for example, when the input operation position is in the vicinity of a position between the adjoining drive areas DV(m) or between the adjoining detection electrodes S(n), a maximum voltage change level R(m0,n0) at an intersection point (m0,n0) and a voltage change level R(m0',n0') at an intersection point (m0', n0') that adjoins the intersection point (m0,n0) are closely analogous to each other. As a results, values of the voltage change levels R(m0,n0) and R(m0',n0') may be inverse due to slight noise in different scan periods, and hence the voltage change level R(m0',n0') at the intersection point (m0',n0') may become a maximum value.

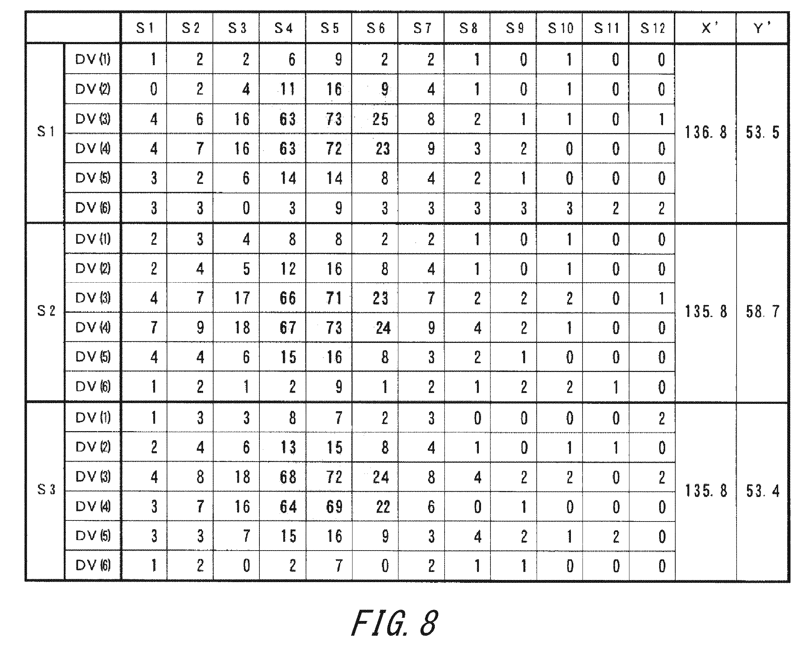

For example, the input operation position in the Y direction calculated from the voltage change levels R(m,n) of all of the intersection points (m,n) shown in Fig. 7 detected in the scan period (S1) is in the vicinity of a position between the drive area DV(3) and the drive area DV(4), and the voltage change level R(3,5) at the intersection point (3,5) is at a maximum value of "73." However, in the next scan period (S2), as shown in Fig. 8, a voltage change level R(4,5) at an adjoining intersection point (4,5) is at a maximum value of "73," which is more than the voltage change level R(3,5) of "71," due to the effect of noise and the like. Furthermore, in the next scan period (S3), the voltage change level R(3,5) of the intersection point (3,5) may be at a maximum value of "72" again, which is more than the voltage change level R(4,5) of "69."

On the other hand, as described above, the input operation position is calculated in each scan period in the X and Y directions from the weighted average values of the voltage change levels R(m,n) of the effective intersection points, which include the intersection point (m0,n0) having the maximum voltage change level R(m0,n0) and the eight intersection points (m1, n1) of the first intersection point group that adjoin and surround the intersection point (m0, n0). If the intersection point (m0, n0) having the maximum value changes due to slight noise, the intersection points (m1, n1) of the first intersection point group, which are designated as the effective intersection points, change. Thus, the input operation position calculated from the voltage change levels R(m,n) of the effective intersection points frequently changes, in spite of that the input operation position is still. As a result, when a cursor is displayed on a monitor display at a position corresponding to the detected input operation position, there is a problem that the display position of the cursor is largely changed in each scan period in spite of that the input operation position does not move.

For example, while intersection points (2,4), (2,5), and (2,6) are designated as the effective intersection points to be used in the calculation of the input operation position in the scan periods (S1) and (S3), intersection points (5,4), (5,5), and (5,6), which are not designated as the effective intersection points in the scan periods (S1) and (S3), are designated as the effective intersection points in the scan period (S2). Therefore, the input operation position in the Y direction largely changes by a slight change in the maximum voltage change level R(m0,n0) of a level "4" or less.

A similar problem occurs if an input operation is performed with an input operation body the size of which is larger than the pitch of the drive areas DV(m) or the detection electrodes S(n). Since the voltage change levels R(m,n) of the adjoining intersection points (m,n) are closely analogous to each other in the vicinity of the maximum value, the intersection point (m0, n0) having the maximum value changes between the adjoining intersection points (m,n) in each scan period, and hence the calculated input operation position changes frequently.

Also, this type of touch panel detects the input operation position from the voltage change levels R(m,n) of the detection voltages in accordance with a change in feeble capacitance with the input operation body, and hence is sensitive to noise occurring in a display device disposed in the vicinity thereof and electrostatic noise in surrounding stray capacitance. Since a detection period of one intersection point (m,n) is 200 to 400 µsec, the electrostatic noise occurring in a period of 5 to 10 µsec manifests itself only in a voltage change level R(m,n) of a specific intersection point (m,n) and cannot be discriminated by a conventional noise discrimination technique.

Furthermore, according to an input operation in which a maximum value is in the vicinity of the input judgment threshold value, most of surrounding intersection points (m1, n1) have the voltage change levels R(m,n) that are lower than the input judgment threshold value, and are not designated as the effective intersection points to be used in the calculation of the input operation position. Accordingly, the input operation position is calculated from the voltage change levels R(m,n) of a limited number of the effective intersection points, resulting in decrease in accuracy.

The present invention has been made with considering such conventional problems, and an object of the present invention is to provide a capacitance type touch panel that detects an input operation position with high accuracy without being affected by noise irrespective of the input operation position and the size of an input operation body, and a method of detecting an input operation position in the capacitance type touch panel.

Another object is to provide a capacitance type touch panel that detects spike noise occurring in a short time and detects the input operation position with high accuracy without being affected by the spike noise, and a method of detecting an input operation position in the capacitance type touch panel.

### Solution to Problem

In a first aspect of the present invention, a capacitance type touch panel includes: a plurality of detection electrodes S(n) arranged at a regular pitch in a first direction of an insulation panel along a second direction orthogonal to the first direction; a plurality of drive areas DV(m) formed at a regular pitch in the second direction of the insulation panel along the first direction, each of the plurality of drive areas DV(m) crossing the plurality of detection electrodes S(n) at an insulation distance away; a detection signal generating circuit for generating an alternating current detection signal at a constant voltage; scan means that while an alternating current detection signal is outputted to any of the plurality of drive areas DV(m), sequentially detects detection voltages appearing in the plurality of detection electrodes S(n) crossing the drive area DV(m) to which the alternating current detection signal is outputted, to detect a voltage change level R(m,n) of each of intersection points (m,n) between the plurality of drive areas DV(m) and the plurality of detection electrodes S(n) from a detection voltage in a state that an input operation body does not approach; and position detection means for detecting an input operation position in the first direction and the second direction from a position of the intersection point (m,n) on the insulation panel at which the voltage change level R(m,n) is equal to or more than a predetermined input judgment threshold value.

The position detection means includes: extreme value detection means for detecting the intersection point (m0, n0) at which the voltage change level R(m,n) is at a maximum value Rmax, which is equal to or more than the input judgment threshold value, in both of the first direction and the second direction by comparing the voltage change levels R(m,n) of the adjoining intersection points (m,n) in the first direction and the second direction; and data selection means for comparing the voltage change level R(m,n) of each of eight intersection points (m1, n1) of a first intersection point group that at least adjoin and surround the intersection point (m0, n0) with a cutoff threshold value set at a ratio less than 1 relative to the maximum value Rmax. The intersection point (m0, n0) having the voltage change level R(m,n) of the maximum value Rmax and the intersection point (m1, n1) of the first intersection point group at which the voltage change level R(m,n) is equal to or more than the cutoff threshold value are designated as effective intersection points. The input operation position in the first direction and the second direction is detected from the position of the effective intersection points on the insulation panel and the voltage change levels R(m,n) of the effective intersection points.

When the input operation position is in between the adjoining intersection points (m,n), the adjoining intersection points (m,n) have the voltage change levels R(m,n) closely analogous to each other, and one of the voltage change levels R(m,n) is at the maximum value Rmax. The voltage change level R(m,n) of the intersection point (m1, n1) of the first intersection point group that is on a side opposite to the input operation position with respect to the intersection point (m0, n0) having the voltage change level R(m,n) of the maximum value Rmax is much lower than the maximum value Rmax to the extent of not reaching the cutoff threshold value, and hence is not used in the detection of the input operation position. As a result, even if either of the adjoining intersection points (m,n) is designated as the intersection point (m0, n0) having the maximum value Rmax, the voltage change level R(m,n) detected in the intersection point (m1, n1) on the opposite side to the input operation position is not used in the detection of the input operation position. Thereby, the input operation position calculated from the voltage change levels R(m,n) of the remaining effective intersection points does not largely change.

Also, when the wide input operation body approaches both of the adjoining intersection points (m,n), the voltage change levels R(m,n) of the adjoining intersection points (m,n) are closely analogous to each other and either of the voltage change levels R(m,n) is at the maximum value Rmax. The voltage change level R(m,n) of the intersection point (m1, n1) of the first intersection point group that is on a side opposite to the center of the wide input operation body with respect to the intersection point (m0,n0) having the voltage change level R(m,n) of the maximum value Rmax is much lower than the maximum value Rmax to the extent that does not reach the cutoff threshold value, and is not used in the detection of the input operation position. As a result, even if either of the adjoining intersection points (m,n) is designated as the intersection point (m0, n0) having the maximum value Rmax, the voltage change level R(m,n) detected in the intersection point (m1, n1) on the opposite side to the center of the input operation body is not used in the detection of the input operation position, so that the input operation position, being the center of the input operation body, calculated from the voltage change levels R(m,n) of the remaining effective intersection points does not largely change.

In a second aspect, in addition to the first aspect, the capacitance type touch panel according to the present invention is configured such that the data selection means compares the voltage change level R(m,n) of each intersection point (m1, n1) of the first intersection point group and each of sixteen intersection points (m2,n2) of a second intersection point group that adjoin and surround each intersection point (m1, n1) of the first intersection point group with the cutoff threshold value, and the position detection means designates, as the effective intersection points, the intersection point (m0,n0) having the voltage change level R(m,n) of the maximum value Rmax, and the intersection point (m1, n1) of the first intersection point group and the intersection point (m2,n2) of the second intersection point group at which the voltage change levels R(m,n) are equal to or more than the cutoff threshold.

The intersection point (m2,n2) of the second intersection point group the detection voltage of which possibly changes by an approach of the input operation body is designated as the effective intersection point, and the voltage change level R(m,n) thereof is used in the detection of the input operation position.

In a third aspect, in addition to the first or second aspect, the capacitance type touch panel according to the present invention is configured such that, when the effective intersection point is only the intersection point (m0, n0) having the maximum value Rmax, the position detection means does not detect the input operation position.

When spike noise occurs, only the voltage change level R(m,n) of the intersection point (m,n) that is scanned at the time of occurrence of the spike noise increases abnormally, and the intersection point (m,n) becomes the intersection point (m0,n0) having the maximum value Rmax that is equal to or more than the input judgment threshold value. On the other hand, the spike noise does not occur during the detection of the intersection points (m1,n1/m2,n2) of the first intersection point group, or the first intersection point group and the second intersection point group that surround the intersection point (m0, n0). Thus, the voltage change level R(m,n) of each of the intersection points (m1,n1/m2,n2) is less than the cutoff threshold value, which is set at a constant ratio less than 1 relative to the maximum value Rmax, and only the intersection point (m0, n0) having the maximum value Rmax is designated as the effective intersection point. Therefore, it is assumed that the spike noise has occurred, and no input operation position is detected.

In a fourth aspect, in addition to any of the first to third aspects, the capacitance type touch panel according to the present invention is configured such that the cutoff threshold value that is set at a constant ratio less than 1 relative to the maximum value Rmax in the vicinity of the input judgment threshold value is less than the input judgment threshold value.

In an input operation, when the voltage change level R(m0,n0) of the intersection point (m0,n0) having the maximum value Rmax is low so as to be in the vicinity of the input judgment threshold value, if the voltage change level R(m,n) of the surrounding effective intersection point is equal to or more than the cutoff threshold value, even though less than the input judgment threshold value, the voltage change level R(m,n) of the intersection point (m,n) is used as the effective intersection point in the detection of the input operation position.

In a fifth aspect, in addition to the first or second aspect, the capacitance type touch panel according to the present invention is configured such that a minimum value of the cutoff threshold value is set at a constant ratio relative to the maximum value Rmax so as to be equal to or more than at least a maximum voltage change level R(n,m) of the intersection point (m,n) due to base noise.

When the maximum value Rmax is the input judgment threshold value, the cutoff threshold value set at the constant ratio relative to the maximum value Rmax is minimized, and equal to or more than the voltage change level R(m,n) of the intersection point (m,n) due to the base noise. Thus, in a state that the input operation body does not approach, the voltage change level R(m,n) does not become equal to or more than the cutoff threshold value, even when being affected by the base noise.

In a sixth aspect of the present invention, a method of detecting an input operation position of a capacitance type touch panel includes: causing a plurality of detection electrodes S(n) arranged at a regular pitch in a first direction of an insulation panel along a second direction orthogonal to the first direction and a plurality of drive areas DV(m) arranged at a regular pitch in the second direction of the insulation panel along the first direction to cross each other at an insulation distance away at each intersection point (m,n); while an alternating current detection signal at a constant voltage is outputted to any of the plurality of drive areas DV(m), sequentially detecting detection voltages appearing in the plurality of detection electrodes S(n) crossing the drive area DV(m) to which the alternating current detection signal is outputted, to detect a voltage change level R(m,n) of each of the intersection points (m,n) between the plurality of drive areas DV(m) and the plurality of detection electrodes S(n) from a detection voltage in a state that an input operation body does not approach; and detecting an input operation position in the first direction and the second direction from the position of the intersection point (m,n) on the insulation panel at which the voltage change level R(m,n) is equal to or more than a predetermined input judgment threshold value.

The method includes: a first step of detecting the intersection point (m0, n0) at which the voltage change level R(m,n) is at a maximum value Rmax, which is equal to or more than the input judgment threshold value, in both of the first direction and the second direction by comparing the voltage change levels R(m,n) of the adjoining intersection points (m,n) in the first direction and the second direction, out of the voltage change levels R(m,n) of all of the intersection points (m,n); a second step of comparing the voltage change level R(m,n) of each of eight intersection points (m1, n1) of a first intersection point group that at least adjoin and surround the intersection point (m0, n0) with a cutoff threshold value set at a ratio less than 1 relative to the maximum value Rmax; and a third step of designating the intersection point (m0, n0) having the voltage change level R(m,n) of the maximum value Rmax and the intersection point (m1, n1) of the first intersection point group at which the voltage change level R(m,n) is equal to or more than the cutoff threshold value as effective intersection points, and detecting the input operation position in the first direction and the second direction from the positions of the effective intersection points on the insulation panel and the voltage change levels R(m,n) of the effective intersection points.

In the first step, the intersection point (m0,n0) is detected at which the voltage change level R(m,n) is at the maximum value Rmax, which is equal to or more than the input judgment threshold value, in both of the first direction and the second direction. In the second step, the voltage change level R(m,n) of each of the eight intersection points (m1, n1) of the first intersection point group that at least adjoin and surround the intersection point (m0,n0) is compared with the cutoff threshold value set at the constant ratio less than 1 relative to the maximum value Rmax. In the third step, the voltage change level R(m,n) of the intersection point (m1, n1) of the first intersection point group that is on a side opposite to the input operation position with respect to the intersection point (m0, n0) having the voltage change level R(m,n) of the maximum value Rmax is much lower than the maximum value Rmax to the extent of not reaching the cutoff threshold value, and is not used in the detection of the input operation position. After the detection of the input operation position, if the intersection point (m,n) that adjoins in the direction of the input operation position to the intersection point (m0, n0) having had the maximum value Rmax become the intersection point (m0, n0) having the maximum value Rmax due to noise or the like in the first step, just as with above, the voltage change level R(m,n) of the intersection point (m1, n1) of the first intersection point group that is on a side opposite to the input operation position is not used in the detection of the input operation position. As a result, even if either of the adjoining intersection points (m,n) having the voltage change levels R(m,n) that are closely analogous to each other in the vicinity of the maximum value is designated as the intersection point (m0, n0) having the maximum value Rmax, the input operation position calculated from the voltage change levels R(m,n) of the effective intersection points does not largely change.

In a seventh aspect, in addition to the sixth aspect, the method of detecting an input operation position of the capacitance type touch panel according to the present invention is configured such that, after the input operation position is detected in the third step, the voltage change levels R(m,n) of the intersection point (m0, n0) having the maximum value Rmax and the effective intersection point are neglected, and the first to third steps are repeated as to the voltage change levels R(m,n) of all of the remaining intersection points (m,n) to detect another input operation position in the third step.

The voltage change levels R(m,n) of the intersection points (m,n) on the insulation panel are detected in every separate scan period. Thus, repeating the first to third steps, with neglecting the voltage change levels R(m,n) of the effective intersection points used in the detection of the input operation position, makes it possible to detect another intersection point (m0,n0) at which the voltage change level R(m,n) becomes the maximum value Rmax. By repeating this, it is possible to detect a plurality of input operation positions in the first direction and the second direction from the positions of the effective intersection points on the insulation panel relative to each intersection point (m0,n0) having the maximum value Rmax and the voltage change levels R(m,n) of the effective intersection points.

According to the invention of any of the first and sixth aspects, even if an input operation is performed in between the adjoining intersection points (m,n) or with the wide input operation body, a detection error of the input operation position due to the noise is small, and hence the input operation position does not largely change in a frequent manner.

According to the invention of the second aspect, the input operation position can be detected with high accuracy with the use of the voltage change levels R(m,n) of the intersection points (m,n) in a wide range around the input operation position.

According to the invention of the third aspect, since the input operation position is not detected when the spike noise occurs, it is possible to detect the input operation position without being affected by the spike noise.

According to the invention of the fourth aspect, it is possible to detect the input operation position with high accuracy from a large number of the voltage change levels R(m,n), because if the voltage change levels R(m,n) of the effective intersection points are equal to or more than the cutoff threshold value, even though less than the input judgment threshold value, the voltage change levels R(m,n) of the intersection points (m,n) are used in the detection of the input operation position.

According to the invention of the fifth aspect, the voltage change level R(m,n) in a state that there is no approach of the input operation body is not used as detection data of the input operation position even with reception of the base noise, so that the input operation position can be detected with high accuracy without being affected by the base noise.

According to the invention of the seventh aspect, even if the input operation is performed at the same time in two or more positions on the insulation panel, each of the input operation positions can be detected, and each of the detected input operation positions does not largely change in each scan period.

### Brief Description of Drawings

Fig. 1 is an explanatory view showing the relation among drive areas DV(m) and detection electrodes S(n) in a capacitance type touch panel 1 according to a first embodiment of the present invention and voltage change levels R(m,n) of the detection electrodes appearing at intersection points (m,n) therebetween.
Fig. 2 is a circuit diagram of the capacitance type touch panel 1.
Fig. 3A is an explanatory view showing the relation between an input operation position P and the voltage change level R(m,n) of each intersection point (m,n), showing a case where a voltage change level R(m,2) at an intersection point (m,2) between the drive area DV(m) and a detection electrode S(2) is at a maximum value Rmax.
Fig. 3B is an explanatory view showing the relation between an input operation position P and the voltage change level R(m,n) of each intersection point (m,n), showing a case where a voltage change level R(m,3) at an intersection point (m,3) between the drive area DV(m) and a detection electrode S(3) is at a maximum value due to the effect of noise.
Fig. 4 is an explanatory view showing a method of detecting an input operation position from the voltage change levels R(m,n) of all of the intersection points (m,n) of m rows and n columns detected in a scan period (S).
Fig. 5 is an explanatory view showing the voltage change levels R(m,n) of all of the intersection points (m,n) and the input operation position detected from the voltage change levels R(m,n) of effective intersection points in each of different scan periods (S1, S2, and S3).
Fig. 6 is an explanatory view showing the relation among drive areas DV(m) and detection electrodes S(n) in a conventional capacitance type touch panel 100 and voltage change levels R(m,n) of the detection electrodes appearing at intersection points (m,n) therebetween.
Fig. 7 is an explanatory view of a conventional method of detecting an input operation position from the voltage change levels R(m,n) of all of the intersection points (m,n) in the capacitance type touch panel 100.
Fig. 8 is an explanatory view showing the voltage change levels R(m,n) of all of the intersection points (m,n) and the input operation position detected in the conventional capacitance type touch panel 100 in each of different scan periods (S1, S2, and S3).

### Description of Embodiments

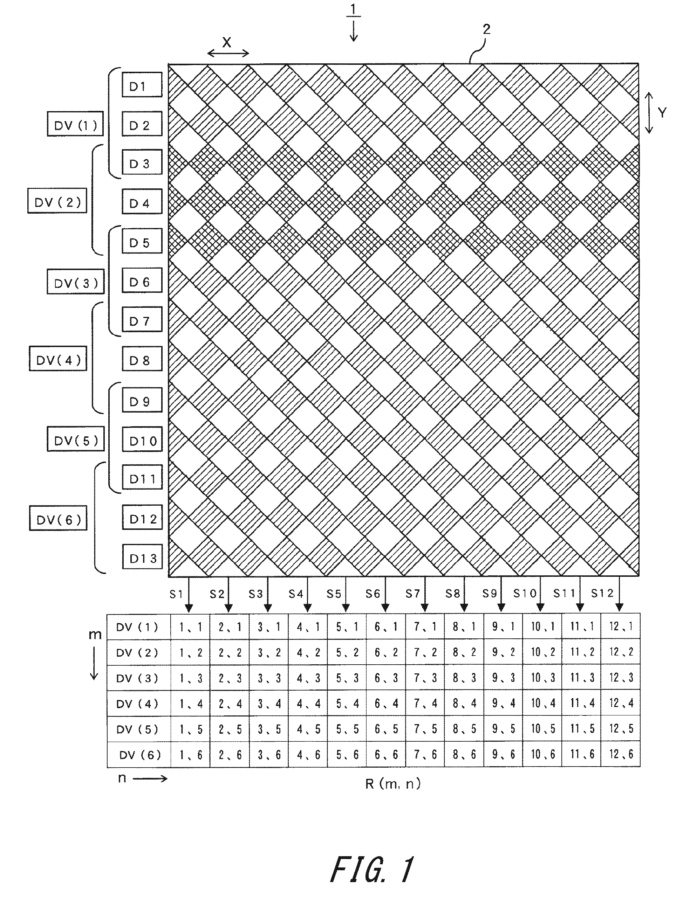

A capacitance type touch panel (hereinafter called touch panel) 1 and a method of detecting an input operation position in the touch panel 1 according to an embodiment of the present invention will be described below with the use of Figs. 1 to 5. As shown in Fig. 1, in this touch panel 1, thirteen drive electrodes D1 to D13 each having a rhombus pattern extending in an X direction and twelve detection electrodes S1 to S12 each having a rhombus pattern extending in a Y direction are arranged on a front surface of an insulation panel 2 such that intersection points thereof are insulated from one another. The thirteen drive electrodes D1 to D13 are arranged at an equal pitch in the Y direction, and the twelve detection electrodes S1 to S12 are arranged at an equal pitch in the X direction. The rhombus patterns of one type of the electrodes complement gaps of the rhombus patterns of the other type of the electrodes, so that a staggered pattern appears as a whole.

A front surface side of the drive electrodes D1 to D13 and the detection electrodes S1 to S12, which are arranged in a lattice pattern on the insulation panel 2, is covered with a not-shown transparent insulation sheet to protect these electrodes and prevent a malfunction by direct contact of an input operation body such as a finger with the electrodes. In other words, in the touch panel 1 according to this embodiment, an input operation is performed by making the input operation body be in contact with or approach to the transparent insulation sheet, and an increase in capacitance between the drive electrodes D and the input operation body owing to the approach of the input operation body through the transparent insulation sheet is read from voltage change levels R(m,n) of detection voltages appearing in the detection electrodes S(n) in the vicinity of the input operation body, thereby detecting the input operation position. On the basis of this detection principle, each of the pitch between the drive electrodes D1 to D13 and the pitch between the detection electrodes S1 to S12 takes such a value that the input operation position can be detected even if the input operation is performed, i.e. the input operation body is made approach any position on the insulation panel 2. In the present embodiment, both of the pitches are set at 4 mm, for example.

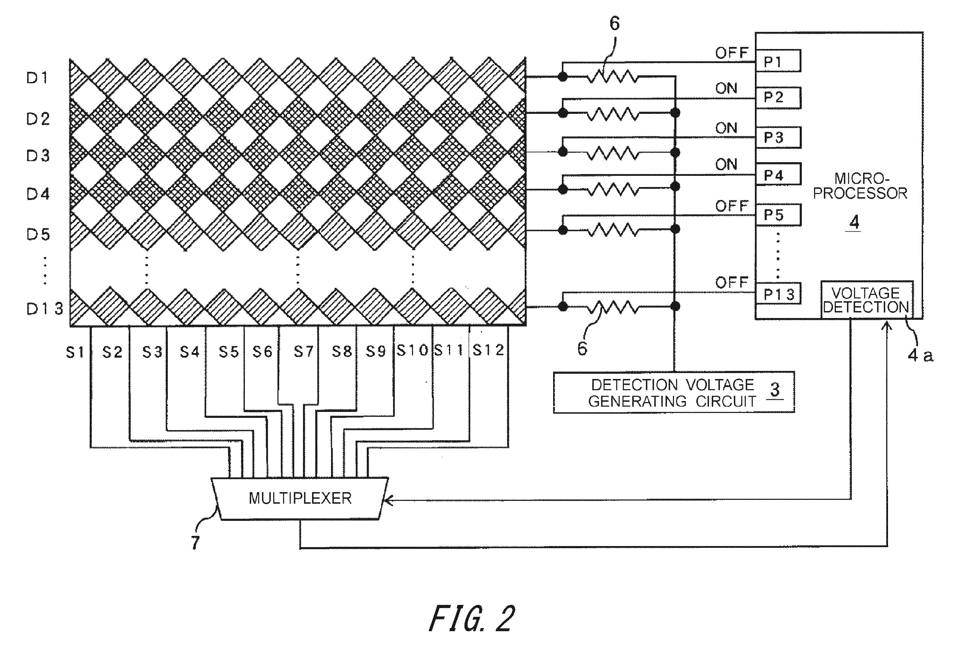

As shown in Fig. 2, each of the drive electrodes D1 to D13 is connected through a damping resistor 6 for removing noise to a detection voltage generating circuit 3. The detection voltage generating circuit 3 outputs a detection signal having a pulse height of V_{O} in a form of a rectangular wave alternating current signal. At connection points between each of the drive electrodes D1 to D13 and the damping resistor 6, input and output ports P1 to P13 of the microprocessor 4 are connected corresponding to the drive electrodes D1 to D13, respectively.

If the input and output port P is in an OFF mode in which the input and output port P is in the state of an output port, the potential of the drive electrode (D1 and D5 to D13 in the drawing) connected to the input and output port is stabilized at a potential of the output port (for example, 0 V if the potential of the output port is in a "L" level, and VCC if the potential of the output port is in a "H" level). Accordingly, the detection signal in the form of the rectangular wave alternating current signal outputted from the detection voltage generating circuit 3 is not outputted to the drive electrode D (D1 and D5 to D13 in the drawing) connected to the input and output port P. Alternatively, if the input and output port P is in an ON mode in which the input and output port P is in the state of an input port, the input port P is in a high impedance state. Thus, the rectangular wave alternating current signal outputted from the detection voltage generating circuit 3 does not flow into the input and output port P (P2 to P4 in the drawing), but the detection signal derived from the rectangular wave alternating current signal is outputted to the drive electrode D (D2 to D4 in the drawing) connected to the input and output port P. In other words, the microprocessor 4 controls the output of the detection signal to the drive electrodes D connected to the input and output ports P only by making arbitrary one or two or more of the input and output ports P into the state of the output port or the input port in an arbitrary sequence.

In this embodiment, as shown in Fig. 1, three drive electrodes D adjoining in the Y direction are grouped into a drive area DV(m). The drive area DV(m) and another drive area DV(n') adjoining in the Y direction overlap at the drive electrode D therebetween, and thus the overlapping drive electrode D constitutes both of the drive areas DV(m) and DV(n'). In this manner, six drive areas DV(m) (m is an integer of 1 to 6) are set in the thirteen drive electrodes D arranged on the insulation panel 2.

The microprocessor 4 puts the input and output ports P corresponding to the drive area DV(m) into the ON mode in a sequence of the drive areas DV(m) along the Y direction, to synchronously output the rectangular wave alternating current signal i.e. the detection signal having a pulse height of V_{O} to the three drive electrodes D constituting the drive area DV(m). Thereby, the detection signal is outputted to every drive electrode D arranged on the insulation panel 2 by six-time drive control for outputting the detection signal on a drive area DV(m) basis.

The twelve detection electrodes S(n) (n is an integer of 1 to 12) are connected to a multiplexer 7, which switches connection to a voltage detection circuit 4a of the microprocessor 4, controlled by the microprocessor 4. The microprocessor 4 sequentially switches connection to the twelve detection electrodes S(n) at intervals of a drive control period of each drive area DV(m), to apply a detection voltage appearing in the connected detection electrode S(n) to the voltage detection circuit 4a of the microprocessor 4.

While the microprocessor 4 outputs the detection signal to any drive area DV(m), the voltage detection circuit 4a reads off the pulse height (detection voltage) of the rectangular wave alternating current signal appearing in the detection electrode S(n) through capacitance C₀ in the detection electrode S(n) that intersects the drive area DV(m). Since this capacitance C₀ is at approximately a constant value, the detection voltage does not vary from a normal voltage V₀ that is proportional to an output voltage of the detection signal, unless there is no approach of the input operation body and no variation in stray capacitance in the drive area DV(m). On the other hand, when the input operation body makes an approach to the drive area DV(m) to which the detection signal is outputted or the detection electrode S(n), the capacitance increases between the drive area DV(m) and the input operation body or between the detection electrode S(n) and the input operation body, and part of the rectangular wave alternating current signal flows into the input operation body and hence the detection voltage appearing in the detection electrode S(n) decreases. The shorter the distance between the input operation body and the drive area DV(m) or between the input operation body and the detection electrode S(n), the more the detection voltage decreases from the normal voltage V₀. Thus, the microprocessor 4 represents a change in the detection voltage at an intersection point (m,n) between the drive area DV(m) to which the detection signal is outputted and the detection electrode S(n) at which the detection voltage is detected as the voltage change level R(m,n), in which the potential difference between the normal voltage V₀ and the detection voltage detected by the voltage detection circuit 4a is inverted and binarized. The microprocessor 4 calculates the input operation position from the voltage change levels R(m, n).

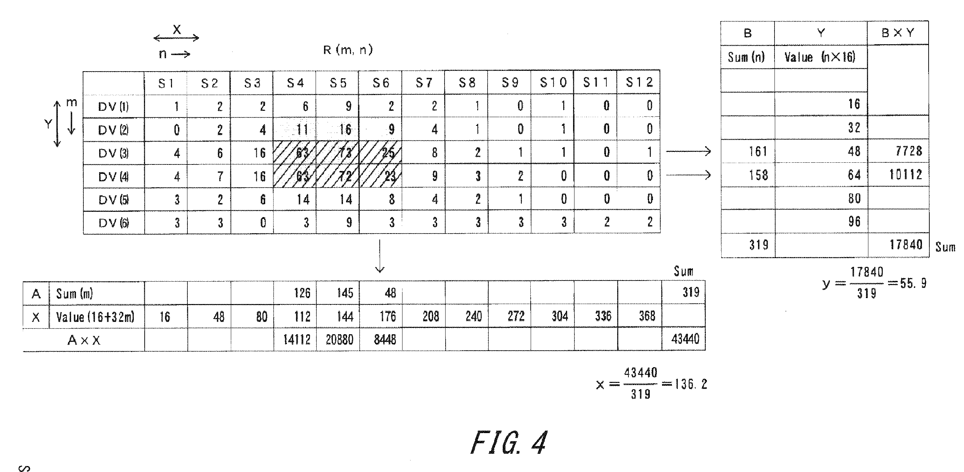

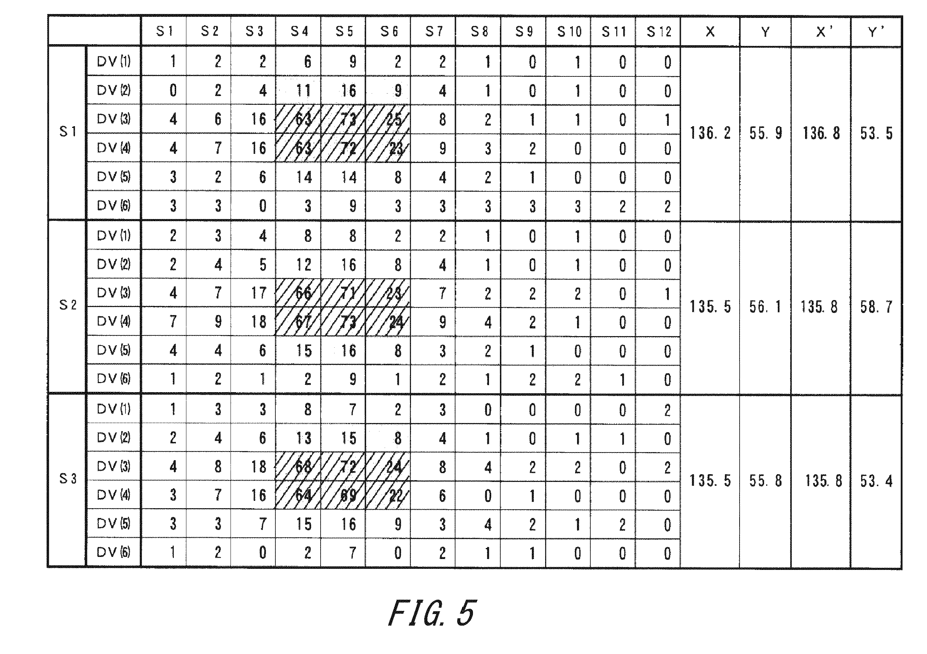

In the above-described touch panel 1, the six drive areas DV(m) are sequentially driven from above and the detection signal is outputted thereto in one scan period (S). While the detection signal is outputted to any drive area DV(m), the multiplexer 7 sequentially selects the twelve detection electrodes S(n) from the left. From the detection voltage of the selected detection electrode S(n), the voltage change levels R(m,n) of six rows and twelve columns, as shown in Figs. 4 and 5 are detected with respect to every intersection point (m,n) of the driven drive area DV(m) and the selected detection electrode S(n). Here, the scan period of each drive area DV(m) is 4 msec, so that the scan period S is 24 msec, i.e. 4 msec x 6 rows.

A position detector of the microprocessor 4 compares the voltage change levels R(m,n) of six rows and twelve columns on a scan period S basis. A voltage change level R(m0,n0), being the voltage change level R(m,n) of a maximum value Rmax, is compared with an input judgment threshold value set at a predetermined value. If the maximum value Rmax is equal to or more than the input judgment threshold value, it is assumed that the input operation body has approached an intersection point (m0,n0). The input operation position is calculated from the position of the intersection point (m0,n0) having the maximum value Rmax and intersection points (m1, n1) belonging to a first intersection point group around the intersection point (m0,n0) in an X-Y direction, the voltage change level R(m0,n0) at the intersection point (m0,n0), and voltage change levels R(m1, n1) at the intersection points (m1, n1). In particular, in this embodiment, out of the intersection points (m1, n1) of the first intersection point group, one or more intersection points (m1, n1) at which a voltage change level R(m1, n1) is equal to or more than a cutoff threshold value Rtd are designated as an effective intersection point to be used in the detection of the input operation position, together with the intersection point (m0, n0) having the maximum value Rmax. With the use of the voltage change level R(m0, n0) and the voltage change levels R(m1, n1) of the effective intersection points, the input operation position in the vicinity of the intersection point (m0, n0) is detected with high accuracy.

Here, the intersection points (m1, n1) of the first intersection point group around the intersection point (m0,n0) adjoin and surround the intersection point (m0,n0) having the voltage change level R(m0,n0) of the maximum value Rmax, and represent eight intersection points (m0±1, n0±1) around the intersection point (m0,n0), including the intersection points adjoining to the intersection point (m0,n0) in diagonal directions. The cutoff threshold value Rtd is set at a value of a predetermined ratio relative to the maximum value Rmax for the purpose of removing a voltage change level R(m1, n1) that causes an error with a change of the intersection point (m0,n0) having the maximum value Rmax from calculation data of the input operation position, out of the voltage change levels R(m1, n1) of the intersection points (m1, n1) adjoining to the intersection point (m0,n0) having the maximum value Rmax. In this embodiment, the cutoff threshold value Rtd is set at 1/2 of the maximum value Rmax.

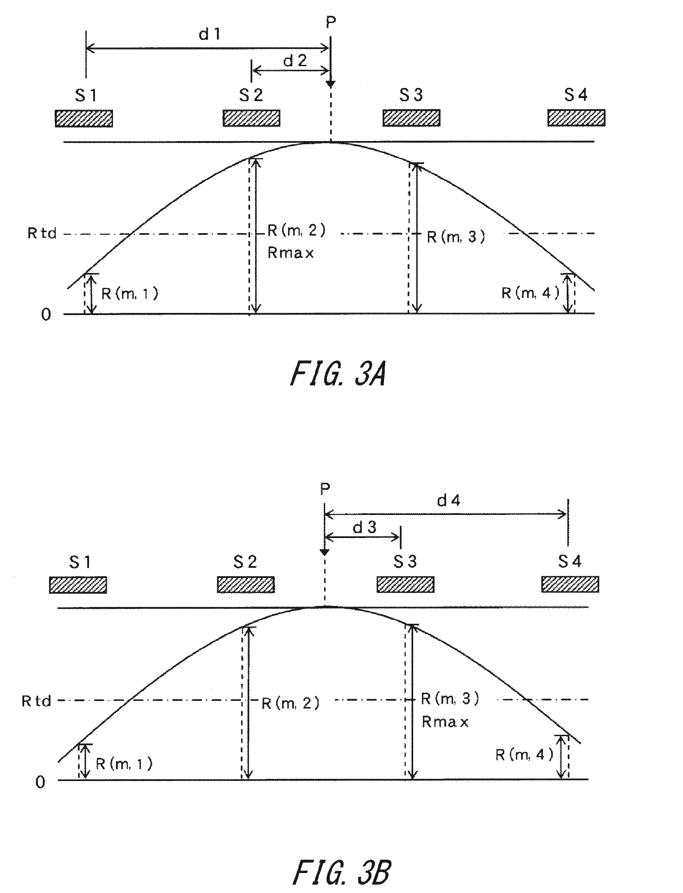

Figs. 3A and 3B show a state in which an input operation position P is in between the detection electrodes S(n) adjoining in the X direction, and the intersection point (m0,n0) having the maximum value Rmax is changed in the X direction due to noise. When the input operation position P is in between a detection electrode S(2) and a detection electrode S(3), a curve R(m,n) that connects the voltage change levels R(m,n) of the intersection points (m,n) of the same drive area DV(m) and each detection electrode S(n) is maximized at a middle point. A voltage change level R(m,2) of an intersection point (m,2) and a voltage change level R(m,3) of an intersection point (m,3) at the left and right of the middle point in the X direction have approximately the same value, and either one having a slightly larger value becomes the maximum value Rmax.

On the other hand, the detection voltage of the detection electrode S(n) varies, irrespective of the input operation position P, by the effect of base noise due to uncertain factors such as an detection error of the circuit and change in surrounding environment, and the voltage change level R(m,n) of each detection electrode S(n) also varies in a minute range. As a result, depending on the timing of generation of the base noise and the amount of the base noise, the voltage change level R(m,2) at the intersection point (m,2) may have the maximum value Rmax as shown in Fig. 3A, or the voltage change level R(m,3) at the intersection point (m,3) may have the maximum value Rmax as shown in Fig. 3B, even though the input operation point P is the same. The intersection point (m0, n0) having the maximum value Rmax easily changes between the intersection point (m,2) and the intersection point (m,3).

Here, as shown in Fig. 3A, when the intersection point (m,2) is the intersection point (m0,n0) having the maximum value Rmax, an intersection point (m, 1) adjoining in the X direction belongs to the first intersection point group adjoining to the intersection point (m0,n0). However, since the distance d1 between the intersection point (m, 1) and the input operation position P is approximately three times as long as the distance d2 between the intersection point (m,2) and the input operation position P, a voltage change level R (m, 1) is less than 1/2 of the voltage change level R(m,2) being the maximum value Rmax, and hence does not reach the cutoff threshold value Rtd. Therefore, intersection points (m-1,1), (m, 1), and (m+1,1), which cross a detection electrode S(1), belong to the first intersection point group adjoining and surrounding the intersection point (m,2), but are not designated as the effective intersection points, and voltage change levels R(m-1,1), R(m, 1), and R(m+1,1) thereof are not adopted into data for calculating the input operation position P.

In a like manner, as shown in Fig. 3B, when the intersection point (m,3) is the intersection point (m0,n0) having the maximum value Rmax, an intersection point (m,4) adjoining in the X direction belongs to the first intersection point group adjoining to the intersection point (m0,n0). However, since the distance d4 between the intersection point (m,4) and the input operation position P is approximately three times as long as the distance d3 between the intersection point (m,3) and the input operation position P, a voltage change level R(m,4) is less than 1/2 of the voltage change level R(m,3) being the maximum value Rmax, and hence does not reach the cutoff threshold value Rtd. Therefore, intersection points (m-1,4), (m,4), and (m+1,4), which cross a detection electrode S(4), belong to the first intersection point group adjoining and surrounding the intersection point (m,3), but are not designated as the effective intersection points. Thus, voltage change levels R(m-1, 4), R(m,4), and R(m+1,4) thereof are not adopted into data for calculating the input operation position P.

In other words, even if either of the intersection points (m,2) and (m,3) becomes the intersection point (m0,n0) having the maximum value Rmax, the voltage change levels R(m1, n1) of the intersection points (m1, n1) that are on a side opposite to the input operation position P relative to the intersection point (m0, n0) are not used in the calculation of the input operation position P. As a result, the calculated input operation position P does not significantly change in the X direction.

Such a situation in which the voltage change levels R(m,n) of the adjoining intersection points (m,n) are closely analogous to each other in the vicinity of the maximum value Rmax also occurs in the case of performing an input operation in between the drive areas DV(m) adjoining in the Y direction, in addition to the case of performing an input operation in between the detection electrodes S(n) adjoining in the X direction, as described above. In such a case, the calculated input operation position P does not significantly change in the Y direction, even if the intersection point (m0,n0) having the maximum value Rmax changes frequently in the Y direction.

Also, such a situation in which the voltage change levels R(m,n) of the adjoining intersection points (m,n) are closely analogous to each other in the vicinity of the maximum value Rmax also occurs in such a case that an input operation is performed with an input operation body with the size extending across the adjoining intersection points (m,n). For example, if an input operation is performed so as to be astride the adjoining drive areas DV(m) or the adjoining detection electrodes S(n) with a wide finger that is wider than the arrangement pitch of the drive areas DV(m) or the detection electrodes (n), both of the voltage change levels R(m,n) of the adjoining intersection points (m,n) are closely analogous to each other in the vicinity of the maximum value Rmax. Even if either of the intersection points (m,n) becomes the intersection point (m0, n0) having the maximum value Rmax, the calculated input operation position P does not significantly change, because the voltage change levels R(m1, n1) of the outward intersection points (m1, n1) that are not covered by the input operation body are not used in the calculation of the input operation position P.

Furthermore, in this embodiment, the cutoff threshold value Rtd is set at a constant ratio (for example, 1/2) that is less than 1 relative to the maximum value Rmax, irrespective of the magnitude of the maximum value Rmax. Thus, if the maximum value Rmax is the same as or slightly larger than the input judgment threshold value, the voltage change levels R(m1, n1) of most of the intersection points (m1, n1) of the first intersection point group adjoining and surrounding the intersection point (m0,n0) having the maximum value Rmax become less than the input judgment threshold value. However, the voltage change levels R(m1, n1) are adopted into data for the calculation of the input operation position as long as being equal to or more than the cutoff threshold value Rtd, even though being less than the input judgment threshold value. Therefore, even with an input operation having low sensitivity in which the maximum voltage change level R(m0, n0) slightly exceeds the input judgment threshold value, it is possible to accurately calculate the input operation position P from a large number of the voltage change levels R(m1, n1).

Also, in this embodiment, if all of the intersection points (m1, n1) of the first intersection point group adjoining and surrounding the intersection point (m0,n0) having the maximum value Rmax have the voltage change levels R(m1, n1) that are less than the cutoff threshold value Rtd, in other words, if only the intersection point (m0,n0) having the maximum value Rmax is designated as the effective intersection point, it is assumed that spike noise has an effect thereon and no input operation position is detected, even if the maximum value Rmax is equal to or more than the input judgement threshold value.

More specifically, while the scan period of each drive area DV(m) is 4 msec and a detection period of each of the intersection points (m,n) at which the twelve detection electrodes S(n) cross each of the drive areas DV(m) is 350 µsec, a period of occurrence of electrostatic noise is 5 to 10 µsec in general. Thus, the occurrence of the spike noise causes an abnormal increase in the voltage change level R(m,n) of only a specific intersection point (m,n), and the specific intersection point (m,n) is detected as the intersection point (m0,n0) having the maximum value Rmax. However, the voltage change levels R(m1, n1) of the intersection points (m1, n1) of the adjoining first intersection point group are not equal to or more than the cutoff threshold value Rtd without being affected by the spike noise. Thus, it is assumed that the spike noise has occurred, because only the intersection point (m0, n0) is designated as the effective intersection point.

The microprocessor 4 detects a maximum value Rmax that exceeds the input judgment threshold value from the voltage change levels R(m,n) of all of the intersection points (m,n) detected in the scan period (S), and calculates an input operation position P in the X-Y direction. Then, the voltage change level R(m,n) of every effective intersection point used in the calculation of the input operation position P is set at "0." If another maximum value Rmax exceeding the input judgment threshold value is detected in the other voltage change levels R(m,n) detected in the same scan period (S), the same process as above is repeated as to an intersection point (m0,n0) at which the maximum value Rmax is newly detected, to detect another input operation position P. Therefore, according to this embodiment, even if a plurality of input operation positions P are inputted at the same time, it is possible to detect each of the input operation positions P.

A method of calculating the input operation position P according to this embodiment will be described below with the use of Figs. 4 and 5, as compared with the method in the conventional touch panel 100. In Figs. 4 and 5, the voltage change levels R(m,n) of six rows and twelve columns detected on an intersection point (m,n) basis are represented by decimal values in which "0" represents a case where the detection voltage read from the detection electrode S(n) is the normal voltage V₀, and take the same values as those of Figs. 7 and 8 described in a conventional example, for the sake of comparison with the input operation position P calculated in the conventional method.

At the intersection points (m,n) that are far from the input operation position P such that the capacitance with the input operation body is negligible, since the detection voltages read from the detection electrodes S(n) are basically at the normal voltage V₀, the voltage change levels R(m,n) at the intersection points (m,n) become "0" or fluctuate among values on the order of 0 to 7 by the effect of the base noise. On the other hand, the cutoff threshold value Rtd, being a discriminant criterion of data to be used in the calculation of the input operation position, has to be set such that a minimum value thereof becomes at least a fluctuation value of the base noise or more, i.e. "8" or more. As described above, the cutoff threshold value Rtd is set at the constant ratio, for example, 1/2 relative to the maximum value Rmax, and takes its minimum value when the maximum value Rmax is equal to the input judgment threshold value. Thus, the input judgment threshold value is set at "16," and the minimum value of the cutoff threshold value Rtd is "8" or more on which the base noise has no effect.

In each scan period (S) shown in Figs. 4 and 5, the input operation position P is in the vicinity of a position between an intersection point (3,5) and an intersection point (4,5). In a scan period (S1) shown in Fig. 4, a voltage change level R(3,5) at the intersection point (3,5) is at a maximum value Rmax, as compared with surrounding values in the X direction and the Y direction, and has a value of "73" exceeding the input judgment threshold value "16." Thus, the intersection point (3,5) is determined to be an intersection point (m0,n0) at which the maximum value Rmax is detected, and the input operation position P is assumed to be in the vicinity thereof.

Note that, if the detected maximum value is less than the input judgment threshold value, it is assumed that the voltage change level R(m,n) is maximized irrespective of the input operation by common mode noise, a detection error, or the like, and the following calculation of the input operation position P is not performed.

In Fig. 4, since the maximum value Rmax exceeding the input judgment threshold value "16" is only "73" at the intersection point (3,5) between a drive area DV(3) and a detection electrode S(5), a cutoff threshold value Rtd of "36.5" is calculated from 1/2 of the maximum value Rmax "73." Then, a voltage change level R(m1, n1) of each of eight intersection points (m1, n1) of a first intersection point group that adjoin and surround the intersection point (3,5) having the maximum value Rmax is compared with the cutoff threshold value Rtd "36.5." The intersection points (m1, n1) having the voltage change levels R(m1, n1) (represented with a gray background and hatched lines in the drawings) that exceed the cutoff threshold value Rtd "36.5" are designated as effective intersection points to be used in the calculation of the input operation position P. In other words, out of the intersection points (m1, n1) belonging to the first intersection point group, voltage change levels R (2,4-6) at intersection points (2,4-6), which cross a drive area DV(2) on a side opposite to the input operation position P relative to the intersection point (3,5) at which the maximum value Rmax is detected, are not used in the calculation of the input operation position P.

An input operation position x in the X direction is calculated from a weighted average of the voltage change levels R(m1, n1) of the effective intersection points in the X direction. To be more specific, a weight is assigned to each arrangement position of the twelve detection electrodes S(n) on the insulation panel 2, with assigning a weight "16" to an initial value and a weight "32" to the pitch in the X direction. The reason why the weight of "16" is assigned to a detection electrode S(1) is that the input operation body has an effect thereon only from one side of the X direction. Then, the voltage change levels R(m1, n1) of the effective intersection points are summed up in the Y direction in each of detection electrodes S(4-6), so that a Sum(4) of "126," a Sum(5) of "145," a Sum(6) of "48," and a sum total of "319" are obtained. By multiplying each of the sum values Sum(4-6) of the detection electrodes S(4-6) by the weight assigned to the arrangement position of each of the detection electrodes S(4-6), a sum total of "43440" is obtained. The input operation position in the X direction calculated from the weighted average is 136.2, that is, "43440"/"319," and therefore a position of 136.2 (between the detection electrode S(4) and the detection electrode S(5)) weighted in the X direction is detected as the input operation position x in the X direction.

In a like manner, an input operation position y in the Y direction is calculated from a weighted average of the voltage change levels R(m1, n1) of the effective intersection points in the Y direction. A weight is assigned to position in the Y direction, with assigning a weight "16" to the pitch of the six drive areas DV(m) and adding a weight "16" to a midpoint position of each drive area DV(m). Then, effective data is summed up in the X direction in each of drive areas DV(3,4), so that a Sum(3) of "161," a Sum(4) of "158," and a sum total of "319" are obtained. By multiplying each of the sum values Sum(3,4) of the drive areas DV(3,4) by the weight assigned to the midpoint position of each of the drive areas DV(3,4) in the Y direction, a sum total of "17840" is obtained. The input operation position in the Y direction calculated from the weighted average is 55.9, that is, "17840"/"319," and therefore a position of 55.9 (between the drive area DV(3) and the drive area DV(4)) weighted in the Y direction is detected as the input operation position y in the Y direction.

As shown in Fig. 5, in the next scan period (S2), since a voltage change level R(4,5) of "73" at an adjoining intersection point (4,5) is at a maximum value Rmax exceeding the input judgement threshold value due to the effect of noise and the like, a voltage change level R(m1, n1) (represented with a gray background in the drawing) of each of eight intersection points (m1, n1) of a first intersection point group that adjoin and surround the intersection point (4,5) is compared with a cutoff threshold value Rtd "36.5." The intersection points (m1, n1) having the voltage change levels R(m1, n1) that exceed the cutoff threshold value Rtd "36.5" are designated as effective intersection points. From the voltage change levels R(m1, n1) thereof (represented with a gray background and hatched lines in the drawing), an input operation position x of "135.5" in the X direction and an input operation position y of "56.1" in the Y direction are calculated in a like manner.

Moreover, in the next scan period (S3), since a voltage change level R(3,5) of "72" at the intersection point (3,5) is at a maximum value exceeding the input judgment threshold value again, the voltage change level R(m1, n1) (represented with a gray background in the drawing) of each of the eight intersection points (m1, n1) of the first intersection point group that adjoin and surround the intersection point (3,5) is compared with a cutoff threshold value Rtd "36," and the intersection points (m1, n1) having the voltage change levels R(m1, n1) that exceed the cutoff threshold value Rtd "36" are designated as effective intersection points. From the voltage change levels R(m1, n1) thereof (represented with a gray background and hatched lines in the drawing), an input operation position x of "135.5" in the X direction and an input operation position y of "55.8" in the Y direction are calculated in a like manner.

As is apparent from comparison between the input operation position (x,y) calculated in each scan period S according to this embodiment described above and the input operation position (x',y') calculated by the conventional method, an error of the input operation position in the Y direction by a movement of the intersection point (m0,n0) having the maximum value Rmax in the Y direction between the intersection point (3,5) and the intersection point (4,5) is reduced to "0.3" at the most in this embodiment, while is "5.3" at the maximum in a distance weighted in the Y direction by the conventional method. Therefore, it is possible to detect the input operation position with high accuracy.

In the above embodiment, out of the eight intersection points (m1, n1) of the first intersection point group that adjoin and surround the intersection point (m0,n0) at which the maximum value Rmax is detected, one or more intersection points (m1, n1) having the voltage change levels R(m,n) that exceed the cutoff threshold value Rtd are designated as the effective intersection points. However, if a voltage change level R(m2,n2) of each of eight intersection points (m2,n2) of a second intersection point group that adjoin and surround each intersection point (m1, n1) of the first intersection point group exceeds the cutoff threshold value Rtd, the intersection point (m2,n2) may be additionally designated as the effective intersection point.

Designating the intersection point (m2,n2) of the second intersection point group as the effective intersection point makes it possible to detect the input operation position with great accuracy, even if the input operation body is put astride the intersection point (m0,n0) and the intersection points (m1, n1) of the first intersection point group that adjoin to one another due to the wide input operation body such as the wide finger or the narrow pitch between the intersection points (m,n), and the adjoining three or four intersection points (m,n) have voltage change levels R(m,n) closely analogous to each other in the vicinity of the maximum value Rmax. This is because the voltage change level R(m2,n2) of each intersection point (m2,n2) of the second intersection point group disposed outside of the intersection points (m1, n1) of the first intersection point group is used in the calculation of the input operation position.

In the above embodiment described above, the cutoff threshold value Rtd is set at the constant ratio, for example, 1/2 of the maximum value Rmax. When the voltage change levels R(m,n) of the adjoining intersection points (m,n) are closely analogous to each other in the vicinity of the maximum value Rmax, the cutoff threshold value can be set at an arbitrary ratio less than 1 relative to the maximum value Rmax, as long as part of the intersection points (m,n) that is outside of the intersection points (m,n) has the voltage change level (m,n) less than the cutoff threshold value Rtd.

Furthermore, the cutoff threshold value Rtd may be set at different ratios depending on the magnitude of the detected maximum value Rmax, relative to the maximum value Rmax. By setting the cutoff threshold value Rtd at the different ratios depending on the magnitude of the maximum value Rmax, it is possible to set an optimal cutoff threshold value Rtd in accordance with different purposes, such as the purpose of removing the voltage change levels R(m,n) causing a detection error from data used in the calculation of the input operation position when the voltage change levels R(m,n) of the adjoining intersection points (m,n) are closely analogous to each other in the vicinity of the maximum value Rmax, the purpose of detecting the spike noise, and the purpose of securing the number of the voltage change levels R(m,n) used in the calculation of the input operation position when the voltage change levels R(m,n) by the input operation have low sensitivity.

In the above embodiment, the drive area DV(m) is composed of a plurality of drive electrodes D, and the formation position of each drive area DV(m) in the Y direction on the insulation panel is set at the midpoint position of the constituting drive electrodes D in the Y direction. However, the drive area DV(m) may be composed of the one drive electrode D, and the arrangement position of the drive electrode D may be designated as the position of the drive area DV(m) in the Y direction.

The present invention is suitable to a capacitance type touch panel that detects an input operation position from the position of intersection points (m,n) at which voltage change levels R(m,n) are changed and the voltage change levels R(m,n) due to a capacitance change by an approach of an input operation body to the intersection points (m,n) between drive areas DV(m) and detection electrodes S(n) arranged in a lattice pattern.

### Reference Signs List

1 capacitance type touch panel
2 insulation panel
3 detection voltage generating circuit (detection signal generating circuit)
4 microprocessor (position detection means, scan means)
DV(m) drive area
S(n) detection electrode

## Claims

1. A capacitance type touch panel comprising:
a plurality of detection electrodes S(n) arranged at a regular pitch in a first direction of an insulation panel along a second direction orthogonal to the first direction;
a plurality of drive areas DV(m) formed at a regular pitch in the second direction of the insulation panel along the first direction, each of the plurality of drive areas DV(m) crossing the plurality of detection electrodes S(n) at an insulation distance away;
a detection signal generating circuit for generating an alternating current detection signal at a constant voltage;
scan means that, while an alternating current detection signal is outputted to any of the plurality of drive areas DV(m), sequentially detects detection voltages appearing in the plurality of detection electrodes S(n) crossing the drive area DV(m) to which the alternating current detection signal is outputted, to detect a voltage change level R(m,n) of each of intersection points (m,n) between the plurality of drive areas DV(m) and the plurality of detection electrodes S(n) from a detection voltage in a state that an input operation body does not approach; and
position detection means for detecting an input operation position in the first direction and the second direction from a position of the intersection point (m,n) on the insulation panel at which the voltage change level R(m,n) is equal to or more than a predetermined input judgment threshold value, wherein
the position detection means includes:
extreme value detection means for detecting the intersection point (m0, n0) at which the voltage change level R(m,n) is at a maximum value Rmax, which is equal to or more than the input judgment threshold value, in both of the first direction and the second direction by comparing the voltage change levels R(m,n) of the adjoining intersection points (m,n) in the first direction and the second direction; and
data selection means for comparing the voltage change level R(m,n) of each of eight intersection points (m1, n1) of a first intersection point group that at least adjoin and surround the intersection point (m0, n0) with a cutoff threshold value set at a ratio less than 1 relative to the maximum value Rmax, and wherein
when the intersection point (m0, n0) having the voltage change level R(m,n) of the maximum value Rmax and the intersection point (m1, n1) of the first intersection point group at which the voltage change level R(m,n) is equal to or more than the cutoff threshold value are designated as effective intersection points, the input operation position in the first direction and the second direction is detected from the position of the effective intersection points on the insulation panel and the voltage change levels R(m,n) of the effective intersection points.

2. The capacitance type touch panel according to claim 1, wherein
the data selection means compares the voltage change level R(m,n) of each intersection point (m1, n1) of the first intersection point group and each of sixteen intersection points (m2,n2) of a second intersection point group that adjoin and surround each intersection point (m1, n1) of the first intersection point group with the cutoff threshold value, and
the position detection means designates, as the effective intersection points, the intersection point (m0, n0) having the voltage change level R(m,n) of the maximum value Rmax, and the intersection point (m1, n1) of the first intersection point group and the intersection point (m2,n2) of the second intersection point group at which the voltage change levels R(m,n) are equal to or more than the cutoff threshold.

3. The capacitance type touch panel according to claim 1 or 2, wherein, when the effective intersection point is only the intersection point (m0, n0) having the maximum value Rmax, the position detection means does not detect the input operation position.

4. The capacitance type touch panel according to any one of claims 1 to 3, wherein the cutoff threshold value that is set at a constant ratio less than 1 relative to the maximum value Rmax in the vicinity of the input judgment threshold value is less than the input judgment threshold value.

5. The capacitance type touch panel according to claim 1 or 2, wherein a minimum value of the cutoff threshold value is set at a constant ratio relative to the maximum value Rmax so as to be equal to or more than at least a maximum voltage change level R(n,m) of the intersection point (m,n) due to base noise.

6. A method of detecting an input operation position of a capacitance type touch panel, including:
causing a plurality of detection electrodes S(n) arranged at a regular pitch in a first direction of an insulation panel along a second direction orthogonal to the first direction and a plurality of drive areas DV(m) arranged at a regular pitch in the second direction of the insulation panel along the first direction to cross each other at an insulation distance away at each intersection point (m,n);
while an alternating current detection signal at a constant voltage is outputted to any of the plurality of drive areas DV(m), sequentially detecting detection voltages appearing in the plurality of detection electrodes S(n) crossing the drive area DV(m) to which the alternating current detection signal is outputted, to detect a voltage change level R(m,n) of each of the intersection points (m,n) between the plurality of drive areas DV(m) and the plurality of detection electrodes S(n) from a detection voltage in a state that an input operation body does not approach; and
detecting an input operation position in the first direction and the second direction from the position of the intersection point (m,n) on the insulation panel at which the voltage change level R(m,n) is equal to or more than a predetermined input judgment threshold value,
the method comprising:
a first step of detecting the intersection point (m0, n0) at which the voltage change level R(m,n) is at a maximum value Rmax, which is equal to or more than the input judgment threshold value, in both of the first direction and the second direction by comparing the voltage change levels R(m,n) of the adjoining intersection points (m,n) in the first direction and the second direction, out of the voltage change levels R(m,n) of all of the intersection points (m,n);
a second step of comparing the voltage change level R(m,n) of each of eight intersection points (m1, n1) of a first intersection point group that at least adjoin and surround the intersection point (m0, n0) with a cutoff threshold value set at a ratio less than 1 relative to the maximum value Rmax; and
a third step of designating the intersection point (m0, n0) having the voltage change level R(m,n) of the maximum value Rmax and the intersection point (m1, n1) of the first intersection point group at which the voltage change level R(m,n) is equal to or more than the cutoff threshold value as effective intersection points, and detecting the input operation position in the first direction and the second direction from the positions of the effective intersection points on the insulation panel and the voltage change levels R(m,n) of the effective intersection points.

7. The method of detecting an input operation position of a capacitance type touch panel according to claim 6, wherein
after the input operation position is detected in the third step, the voltage change levels R(m,n) of the intersection point (m0, n0) having the maximum value Rmax and the effective intersection point are neglected, and the first to third steps are repeated as to the voltage change levels R(m,n) of all of the remaining intersection points (m,n) to detect another input operation position in the third step.
